Europäisches Patentamt

European Patent Office

Office européen des brevets

(19)

(11) **EP 1 453 005 A2**

(12) **EUROPEAN PATENT APPLICATION**

(43) Date of publication:
01.09.2004 Bulletin 2004/36

(51) Int Cl.⁷: **G06T 9/00**

(21) Application number: 04004557.7

(22) Date of filing: 27.02.2004

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: 28.02.2003 JP 2003054618

(71) Applicant: **NTT DoCoMo, Inc.
Tokyo 100-6150 (JP)**

(72) Inventors:
• **Sugimoto, Kazuo c/o Intellectual Property Dept.
Chiyoda-ku Toyko 100-6150 (JP)**

• **Moschetti, Fulvio c/o Intellectual Property Dept.
Chiyoda-ku Toyko 100-6150 (JP)**
• **Kato, Sadaatsu c/o Intellectual Property Dept.
Chiyoda-ku Toyko 100-6150 (JP)**

(74) Representative: **Grosse, Wolfgang, Dipl.-Ing. et al
Patent- & Rechtsanwälte Grosse, Bockhorni &
Schumacher,
Forstenrieder Allee 59
81476 München (DE)**

(54) **Image encoding apparatus and method**

(57)    In a video coding apparatus 1, a conversion unit 8 converts an image into atom information including index information to a basis, a coefficient and positional information specifying a position where a pattern is restored. An encoding unit 12 encodes an atom flag specifying existence of atom information and the number of items of atom information for each of blocks into which the image is divided. The encoding unit 12 converts the positional information of the atom information included in each of the block into positional information which specifies a relative position in the block, and encodes the atom information to generate a compression code. The above processing is performed while changing the size of the block, and the compression code with the minimum bit rate and a code relating to the size of the block used for the generation thereof are included in compression data.

*Fig.1*

**Description**

BACKGROUND OF THE INVENTION

Field of the Invention

The present invention relates to an image encoding apparatus, an image encoding method, an image encoding program, an image decoding apparatus, an image decoding method, and an image decoding program.

Related Background of the Invention

In an image encoding apparatus, processing which decomposes a coding target image by using a plurality of bases is executed. As a kind of such an image encoding apparatus, an image encoding apparatus which executes processing which decomposes an coding target image by using a Matching Pursuits method (hereinafter, referred to as an "MP method" in this specification) is known (see Neff R. and Zakhor A., "Very Low Bit-Rate Coding Based on Matching Pursuit," IEEE Trans. Circuits Syst. Video Technol., vol. 7, no. 1, pp. 158-171, February 1997, for example). The MP method repeats the processing, which defines a coding target image as an initial residual component and decomposes the residual component by using a basis set which includes a plurality of basis, by using the following formula (1). Here, in the formula (1), f denotes an coding target image, $R_n f$ does a residual component after the n-th repetitive operation, $g_{kn}$ does a basis which maximizes an inner product value with $R_n f$, and $R_m f$ does a residual component after the m-th repetitive operation. That is, according to the MP method, the basis which maximizes an inner product value with a residual component is chosen from the basis set, and the residual component is decomposed into the selected basis and a largest inner product value which is a coefficient for multiplication with this basis.

$$f = \sum_{n=0}^{m-1} \langle R_n f, g_{kn} \rangle g_{kn} + R_m f \quad \cdots (1)$$

In the case of converting an image to produce compression data by using this MP method, it is necessary to encode of the above-described coefficient, the index information to a basis, and the positional information which specifies a position where a pattern made by multiplying the basis which is specified by the index information, by a coefficient is restored, whereby generating a compression code, and to include the compression code in compression data.

SUMMARY OF THE INVENTION

In the research of an image encoding apparatus which decomposes an coding target image to produce compression data by a decomposing method such the MP method, the inventor found out that it was necessary to further reduce a bit rate of compression data generated by a conventional image encoding apparatus.
Then, it is an object of the present invention to provide an image encoding apparatus, an image encoding method and an image encoding program, which make an image the compression data with low bit rate, and providing an image decoding apparatus, an image decoding method and an image decoding program for decoding such the compression data.
In order to achieve the above-described object, an image encoding apparatus of the invention comprises: conversion means for converting a coding target block within a coding target image into conversion information; quantization means for quantizing the conversion information and generating quantized conversion information; encoding means for generating compression data by encoding the quantized conversion information based on predetermined entropy encoding rules. The encoding means encodes the block size, into which the coding target image is divided, and generates compressed block size information which is included in a header information. The entropy encoding rules are switched according to the block size.
In addition, in order to achieve the above-described object, an image encoding method of the present invention including: a conversion step in which conversion means converts a coding target block within a coding target image into conversion information; a quantization step in which quantization means quantizes the conversion information and generates quantized conversion information; an encoding step in whcih encoding means generates compression data by encoding the quantized conversion information based on predetermined entropy encoding rules. In the encoding step, the encoding means encodes the block size, into which the coding target image is divided, and generates compressed block size information which is included in a header information. The entropy encoding rules are switched according to the block size.

According to the invention, the entropy encoding rules are switched appropriately based on the block size. Therefore the bit rate of compression data can be reduced.

In addition in order to achieve the above-described object, an image encoding program of the present invention makes a computer function as: conversion means for converting a coding target block within a coding target image into conversion information; quantization means for quantizing the conversion information and generating quantized conversion information; and encoding means for generating compression data by encoding the quantized conversion information based on predetermined entropy encoding rules. The encoding means encodes the block size, into which the coding target image is divided, and generates compressed block size information which is included in a header information. The entropy encoding rules are switched according to the block size.

Since the image encoding program makes a computer function as the conversion means, the quantization means, and the encoding means, the computer which operates by this image encoding program is made capable of generating the compression data of an coding target image with a low bit rate.

Preferably, in the present invention, the conversion means converts the coding target image, based on a predetermined conversion rule, into the conversion information including index information for specifying a basis used for decomposition of the coding target image among a plurality of bases stored in dictionary storage means, a coefficient by which the basis specified by the index information is multiplied, and positional information for specifying a position where a pattern made by multiplying the basis specified by the index information by the coefficient is restored. The encoding means generates the compression data including a compression code made by encoding the quantized conversion information generated by the quantization means based on a predetermined compression encoding rule. The encoding means executes processing in which the encoding means divides the coding target image into a plurality of blocks, extracts, for each of the plurality of blocks, the quantized conversion information the positional information of which is included in the block, encodes, for each of the plurality of blocks, a flag for specifying existence of the quantized conversion information the positional information of which is included in the block, encodes, for each of the plurality of blocks, the number of items of quantized conversion information each of which includes the positional information included in the block, converts the positional information of the quantized conversion information into intra-block positional information specifying a relative position in the block in which the positional information is included, and encodes the quantized conversion information, while changing size of the block, whereby the encoding means generates a plurality of compression codes, and includes a code relating to size of the block in which a bit rate of the compression code becomes at a minimum and the compression code generated at the size in the compression data.

According to the invention, an coding target image is divided into a plurality of blocks, and a compression code, which includes a code made by encoding, for each of the plurality of blocks, a flag specifying the existence of quantized conversion information and the number of quantized conversion information when the quantized conversion information is included is generated in the blocks. In addition, for each of the plurality of blocks, positional information of the conversion information included in the block is converted into inter-block positional information specifying a relative position in the block, and a code made by encoding this conversion information is included in the compression code. The above processing is executed while changing the size of a block, and a code relating to the size of a block in which a bit rate of the compression code is made minimum and the compression code which is obtained by dividing an coding target image into blocks having such size are included in compression data. The amount of codes of the inter-block positional information can be lessened as the size of a block becomes smaller, but the amount of codes relating to the flag and number of quantized conversion information becomes larger. Conversely, the amount of codes relating to the flag and number of quantized conversion information can be made smaller as the size of a block becomes larger, but the amount of codes of inter-block positional information becomes larger. According to the invention, since a compression code with an optimal bit rate can be included in compression data among compression codes generated by changing the size of a block applied to an coding target image, it becomes possible to generate the compression data of an coding target image with a low bit rate.

In the present invention, the quantization means quantizes the coefficient included in the conversion information to generate the quantized conversion information including a quantized coefficient. When encoding the quantized conversion information in the aforementioned processing, the encoding means, preferably, extracts a minimum absolute value among absolute values of the quantized coefficients included in a plurality of items of quantized conversion information, includes a code relating to the minimum absolute value in the compression data, converts each of the quantized coefficients into a differential value between the absolute value for each of the quantized coefficients and the minimum absolute value, includes the differential values in the compression code after encoding, and includes a positive or negative sign for each of the coefficients in the compression code after encoding.

According to the invention, a minimum absolute value among absolute values of the quantized coefficients included in a plurality of items of quantized conversion information, and a code relating to the absolute value is included in compression data. The quantized coefficient included in the quantized conversion information is converted into a differential value between its absolute value and the minimum absolute value, and this differential value and a positive or negative sign of the quantized coefficient are included in compression code after compression coding. Thus, since the quantized coefficient included in the quantized conversion information becomes small in the amount of codes by being changed into a differential value, a bit rate of compression data is further reduced.

In the present invention, preferably, the encoding means arranges, for each of the plurality of blocks, the items of quantized conversion information each of which includes the positional information included in the block in the descending order of absolute values of the quantized coefficients, encoding the differential values in the order of arrangement, and stops encoding of the differential values when the differential value of zero appears.

According to the invention, for each of the plurality of blocks, the items of quantized conversion information included in the block is arranged in the descending order of absolute values of the quantized coefficients. Each of the quantized coefficients arranged in the descending order of absolute values is made to be a differential value between a absolute value thereof and the minimum absolute value, and the differential values are encoded in the arranged order. The encoding of the differential value in each of the blocks is stopped when the differential value of zero appears. Thus, since a compression code is not generated for differential values of zero among the differential values, a bit rate of compression data is further reduced.

In the present invention, preferably, the encoding means uses arithmetic coding as the predetermined compression encoding rule and executes the arithmetic coding by using a predetermined probability table being different according to size of the block.

According to the invention, the flag specifying the existence of quantized conversion information, the number of quantized conversion information and the quantized conversion information are encoded by arithmetic coding using a predetermined probability table differing according to the size of blocks into which an coding target image is divided. Since a probability that conversion information is included in a block, an appearance probability of a numeric value of the number of quantized conversion information, and the like differ from each other according to the size of a block, it becomes possible to further reduce a bit rate of compression data by using a probability table differing according to the size of a block.

Another aspect of the present invention relate to an image decoding apparatus which decodes the compression data which is generated by the image encoding apparatus or a computer operating by the image encoding program to generate an image. The image decoding apparatus comprises: decoding means for generating quantized conversion information by decoding compression data based on predetermined entropy decoding rules; inverse quantization means for inversely quantizing the quantized conversion information and generating conversion information; and inverse conversion means for inversely converting the conversion information into a decoding target block within a decoding target image. The decoding means decodes compressed block size information which is included in a header information and generates the block size, into which the decoding target image is divided. The entropy decoding rules are switched according to the block size.

In addition, an image decoding method of the present invention includes: a decoding step in which decoding means generates quantized conversion information by decoding compression data based on predetermined entropy decoding rules; an inverse quantization step in which inverse quantization means inversely quantizes the quantized conversion information and generating conversion information; and an inverse conversion step in which inverse conversion means inversely convertes the conversion information into a decoding target block within a decoding target image. In the decoding step, the decoding means decodes compressed block size information which is included in a header information and generates the block size, into which the decoding target image is divided. The entropy decoding rules are switched according to the block size.

According to the present invention, it becomes possible to restore a decoding target image from compression data generated by the image encoding apparatus of the present invention.

In addition, an image decoding program of the present invention makes a computer function as: decoding means for generating quantized conversion information by decoding compression data based on predetermined entropy decoding rules; inverse quantization means for inversely quantizing the quantized conversion information and generating conversion information; and inverse conversion means for inversely converting the conversion information into a decoding target block within a decoding target image. The decoding means decodes compressed block size information which is included in a header information and generates the block size, into which the decoding target image is divided. The entropy decoding rules are switched according to the block size.

Since the image decoding program of the present invention makes a computer function the decoding means, the inverse quantization means, and the inverse conversion means, a computer which operates by this image decoding program is made possible to restore an decoding target image from the compression data which is generated by the image encoding apparatus of the present invention.

In the present invention, preferably, in the decoding step, the decoding means decodes compression data including a compression code made by encoding the quantized conversion information, based on a predetermined decoding rule, the quantized conversion information being made by quantizing the conversion information which is made by conversing the decoding target image, based on a predetermined conversion rule, into index information to a basis used for decomposition of the decoding target image among a plurality of bases, a coefficient by which the basis specified by the index information is multiplied, and positional information for specifying a position where a pattern made by multiplying the basis specified by the index information by the coefficient is restored. In the inverse conversion step, the inverse conversion means generates the decoding target image from the conversion information decoded by the decoding means by using the plurality of bases stored in dictionary storage means, based on a predetermined inverse conversion rule. The compression data includes a code relating to size of blocks into which the decoding target image is divided, and the positional information included in the conversion information is made to be intra-block positional information specifying a relative position in the block in which the positional information is included. In the decoding step, the decoding means refers to the code relating to size of the block included in the compression data and converts the intra-block positional information included in the conversion information into the positional information specifying a position in the decoding target image.

According to the present invention, compression data generated by the image encoding apparatus is decoded, and inter-block positional information included in conversion information is converted into the positional information which specifies a position in a decoding target image based a code relating to the size of a block included in the compression data. The decoding target image is restored by the inverse conversion processing using this conversion information. Therefore, it becomes possible to restore a decoding target image from compression data generated by the image encoding apparatus of the present invention.

In the present invention, preferably, the quantized conversion information includes a quantized coefficient being made by quantizing the coefficient. The compression data includes the compression code made by encoding a code relating to a minimum absolute value among absolute values of the quantized coefficients included in a plurality of items of quantized conversion information, differential values between the absolute values of the quantized coefficients and the minimum absolute value, a positive or negative sign of the quantized coefficients. The decoding means adds the minimum absolute value to each of the differential values included in the plurality of items of quantized conversion information generated by decoding the compression data with reference to a code relating to the minimum absolute value, and gives the positive or negative sign included in the quantized conversion information to an added value.

According to the present invention, for each of the plurality of items of the quantized conversion information generated by decoding the compression data, the minimum absolute value is added to the differential value included in the quantized conversion information and gives a positive or negative sign included in the quantized conversion information to an added value. Therefore, it becomes possible to restore a quantized coefficient for quantized conversion information where the quantized coefficient has been converted into a differential value as mentioned above in order to reduce a bit rate.

In the present invention, preferably, the compression code included in the compression data is generated by encoding with arithmetic coding in which a predetermined probability table being different according to size of the block is used as the predetermined compression encoding rule, and the decoding means executes inverse arithmetic coding based on the predetermined decoding rule by using the predetermined probability table according to size of blocks into which the decoding target image is divided.

According to the present invention, inverse arithmetic coding for decoding compression data is executed on the basis of a predetermined decoding rule by using a predetermined probability table according to the size of blocks into which a decoding target image is divided. Therefore, according to this image decoding program, it becomes possible to decode compression data generated by using a probability table variable according to the size of a block in order to reduce a bit rate.

The present invention will be more fully understood from the detailed description given hereinbelow and the attached drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

BRIEF DESCRIPTION OF THE DRAWINGS

In the course of the following detailed description, reference will be made to the attached drawings in which:

Fig. 1 is a block diagram showing the functional configuration of a video encoding apparatus according to an embodiment;

Fig. 2 is a diagram showing an example of correspondence relation between coding values of atom flags and binary values;

Fig. 3 is a diagram showing an example of initial values on a probability table used for the arithmetic coding of an atom flag;

Fig. 4 is a diagram showing another example of initial values on the probability table used for the arithmetic coding of an atom flag;

Fig. 5 is a diagram showing an example of correspondence relation between coding values of an atom number and binary values;

Fig. 6 is a diagram showing an example of initial values of a probability table for the arithmetic coding of an atom number, and shows an example of initial values of the probability table used for the arithmetic coding of a BIN number 0 of a binary value corresponding to the atom number;

Fig. 7A is a diagram showing an example of correspondence relation between inter-block positional information and binary values in the case of a block size of 4 x 4;

Fig. 7B is a diagram showing an example of correspondence relation between inter-block positional information and binary values in the case of a block size of 8 x 8;

Fig. 7C is a diagram showing an example of correspondence relation between inter-block positional information and binary values in the case of a block size of 16 x 16;

Fig. 8 is a diagram showing an example of correspondence relation between index information and binary values;

Fig. 9 is a diagram showing an example of correspondence relation between positive or negative signs and binary values;

Fig. 10 is a diagram showing an example of correspondence relation between differential quantized coefficients and binary values;

Fig. 11 is a flow chart showing a video encoding method according to an embodiment;

Fig. 12 is a flow chart showing a video encoding method according to an embodiment, and shows the coding processing of atom information in a block in this video encoding method;

Fig. 13 is a block diagram showing the functional configuration of a video decoding apparatus according to an embodiment;

Fig. 14 is a flow chart of a video decoding method according to an embodiment;

Fig. 15 is a diagram showing the configuration of a video encoding program according to an embodiment; and

Fig. 16 is a diagram showing the configuration of a video decoding program according to an embodiment.

## DESCRIPTION OF THE PREFERRED EMBODIMENTS

A video encoding apparatus 1 according to an embodiment of the present invention will be explained. The video encoding apparatus 1 is a computer, physically, provided with a CPU (central processing unit), a memory device, and a storage device such as a hard disk, and the like. The "computer" here also includes an information personal digital assistant such as a mobile communication terminal in addition to a normal computer such as a personal computer, and the idea of the present invention is widely applied to apparatuses which can process information.

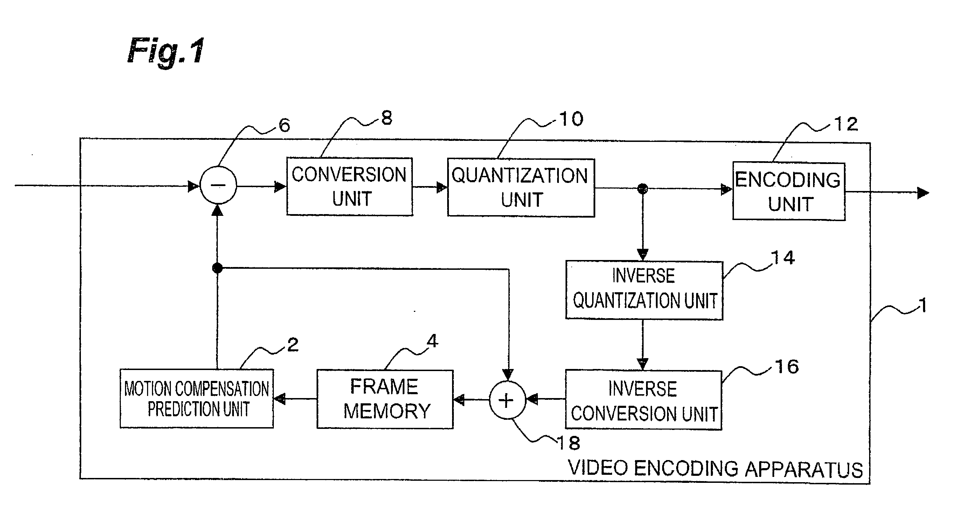

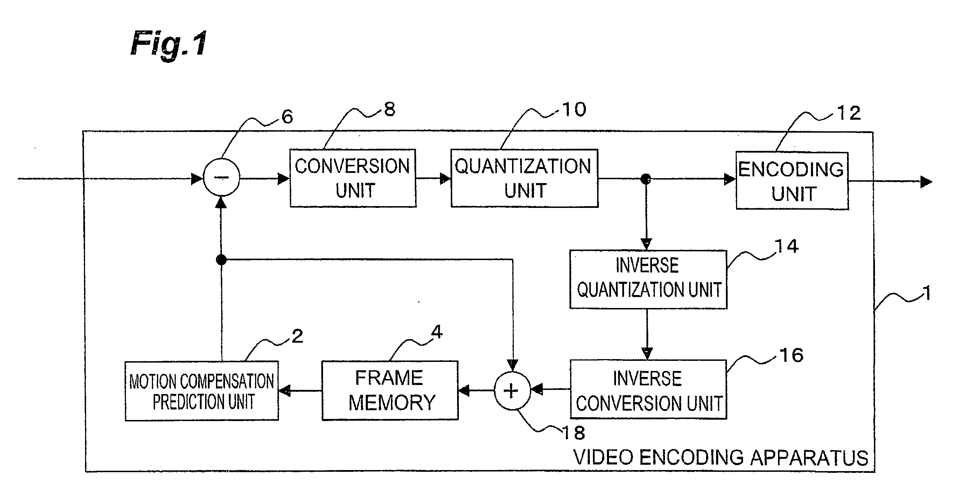

Next, the functional configuration of the video encoding apparatus 1 will be explained. Fig. 1 is a block diagram showing the functional configuration of the video encoding apparatus 1. As shown in Fig. 1, the video encoding apparatus 1 comprises a motion compensation prediction unit (motion compensation prediction means) 2, frame memory 4, a subtraction unit (subtraction means) 6, a conversion unit (conversion means, dictionary storage means) 8, a quantization unit 10, an encoding unit (coding means) 12, an inverse quantization unit 14, an inverse conversion unit 16, and an addition unit 18. Hereafter, each component will be explained in detail.

The motion compensation prediction unit 2 performs motion compensation for a coding target frame by using a reference frame stored in the frame memory 4, and generates a predicted image of the coding target frame.

More specifically, the motion compensation prediction unit 2 divides a coding target frame into a plurality of blocks with a predetermined size. This predetermined size can be made into the size of 16 pixels x 16 lines. The motion compensation prediction unit 2 performs the block matching of each of the blocks and a reference area which is a predetermined area in reference frames stored in the frame memory 4 and detects a motion vector of each of the plurality of blocks to the reference frame. The motion compensation prediction unit 2 generates a predicted image of the coding target frame from the reference frame by using this motion vector.

Note that, an image in a reference area which is generated from a reference frame is not limited to an image constituted by only integer pixels, but an image, where interpolation pixels which interpolate a half position or a quarter position between integer pixels are provided, may be acceptable. By providing interpolation pixels in this manner, detection of a motion vector in high accuracy is made possible.

The subtraction unit 6 executes differential operation between a predicted image generated by the motion compensation prediction unit 2 and the coding target frame to generate a prediction residual image which consists of residuals between the predicted image and the coding target frame.

The conversion unit 8 decomposes a prediction residual image by the MP method shown in the formula (1).

The conversion unit 8 stores a basis set used in order to execute the MP method. Each basis included in the basis set is based on a predetermined two-dimensional function.

As the predetermined two-dimensional function, for example, a two-dimensional function on the basis of a generating function shown in the following formula (2) can be used.

$$(4x'^2 - 2)e^{-(x'^2 + y2)} \tag{2}$$

In addition, the predetermined two-dimensional function includes parameters variously deforming a two-dimension pattern generated by the generating function.

As these parameters, it is possible to use a motion parameter for moving a two-dimensional pattern generated by formula (2), a rotation parameter for rotating it, a scaling parameter for expanding and shrinking it independently in the two directions of X and Y directions, and a curve parameter for curving the two-dimensional pattern.

Here, in order to curve the two-dimensional pattern, it is possible to substitute x' according to the following formula (3) in formula (2) to use K and $\alpha$ of the following formula (3) as curve parameters. For example, by giving 2 as $\alpha$, it is possible to obtain an arch-like two-dimensional pattern by curving a two-dimensional pattern generated by the generating function of the formula (2). In addition, by giving a positive or negative numerical value to K, it is possible to change the direction of an arch-like two-dimensional pattern.

$$x' = x + Ky^{\alpha} \tag{3}$$

The conversion unit 8 converts the prediction residual image into a set of atom information including a basis chosen from the basis set, a coefficient by which the basis is multiplied, and positional information for specifying a position where a pattern made by multiplying the basis by the coefficient is restored, according to the above-mentioned formula (1) by using the basis set obtained by adjusting the above-described parameters.

The coefficient included in atom information is subjected to quantizing operation by the quantization unit 10, and a quantized coefficient is included in the atom information instead of the coefficient.

The encoding unit 12 encodes a motion vector generated by the motion compensation prediction unit 2 by entropy coding processing to generate a compression code.

In addition, the encoding unit 12 encodes atom information in which the coefficient included in it has been quantized coefficient by the quantization unit 10 to generate a compression code. The encoding unit 12 generates compression data containing these compression codes.

Hereafter, the encoding processing of atom information will be explained in detail. In the encoding processing, the encoding unit 12 first obtains a quantized coefficient whose absolute value is at a minimum among quantized coefficients included in a plurality of items of atom information generated by decomposing a coding target frame, and stores it as the minimum absolute value of the quantized coefficient in the coding target frame. This minimum absolute value is included in compression data by being included in a frame header of each coding target frame.

Next, the encoding unit 12 divides the coding target frame into a plurality of blocks, and performs the encoding processing of the atom information in each blocks. The encoding processing of the atom information to the coding target frame is performed by changing the size of a block. As the size of a block, it is possible, for example, to use three sorts of size: 4 x 4, 8 x 8 and 16 x 16 and, in this case, encoding processing of atom information is repeated three times. Here, the size of a block and the number of times that the size of a block is changed are not limited to the example.

In each of the plurality of blocks into which a coding target frame has been divided, the encoding unit 12 obtains an atom flag specifying the existence of atom information having positional information, the position being included in the block.

In addition, when the atom information is included in the block, it obtains the number of items of the atom information (hereafter, the number of items of the atom information is referred as "atom number").

Then, the encoding unit 12 performs the arithmetic coding of the atom flags and the atom numbers, and includes them in a compression code. This arithmetic coding processing will be described later.

Next, for each of the plurality of blocks, the encoding unit 12 arranges the items of atom information included in the block in the descending order of their absolute values.

Then, the encoding unit 12 makes the positional information into inter-block positional information converted into relative positional information, in the block where the positional information is included, and performs the arithmetic coding of this inter-block positional information and index information in the arrangement order to include them in the compression code.

In addition, the encoding unit 12 performs arithmetic coding of the quantized coefficients after converting the quantized coefficients into a differential quantized coefficient being a differential value between its absolute value and the minimum absolute value, and includes them in the compression code. Here, in the processing of performing arithmetic coding of the differential quantized coefficient in the arrangement order, in each block, the coding of the differential quantized coefficient is stopped when the differential quantized coefficient of "0" appears.

Furthermore, the encoding unit 12 performs arithmetic coding of a positive or negative sign specifying the positive or negative of each quantized coefficient to include it in the compression code.

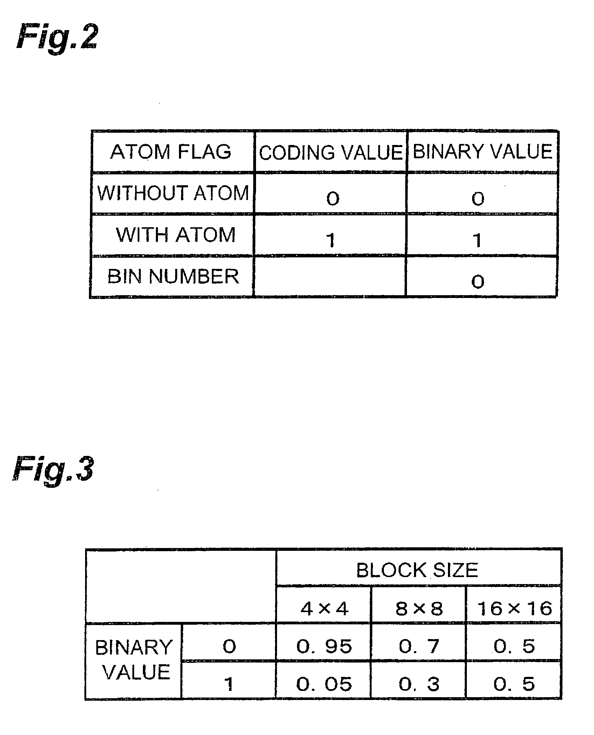

Hereafter, the arithmetic coding processing of the atom information performed by the encoding unit 12 mentioned above will be explained in detail. First, each of the atom flags specifying the existence of the atom in the blocks is converted into a binary value by using correspondence relation between coding values of atom flags and binary values that is shown in Fig. 2.

The atom flag that has been made into a binary value is arithmetic-coded by using a probability table on which an initial value differs for every size of a block. A probability table as shown in Fig. 3 may be used as this probability table.

Fig. 3 shows an example of the initial value in the probability table that is used for the arithmetic coding of an atom flag, and the initial value on the probability table differs according to the size of a block. This is because the smaller the size of a block is, the smaller a probability that each block has the atom information in it is and, on the contrary, the larger the size of a block is, the larger a probability that each block has the atom information in it is. Since arithmetic coding is to assign a code in a section on a number line by using a probability table, a probability table of differing according to a block size as shown in Fig. 3 is preferably used so that a large section may be assigned to a binary value with a high frequency in the coding of an atom flag.

A probability table used for the arithmetic coding of the atom flag is updated in accordance with frequency of binary values in the past so that a section on a number line may be largely assigned to a binary value with a high frequency.

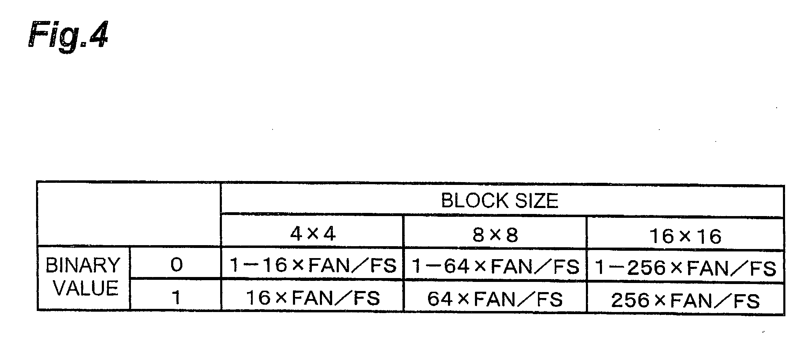

Note that, a probability table shown in Fig. 4 is also applicable as a probability table used for the arithmetic coding of the atom flag. In Fig.4, "FAN" denotes an atom number in a frame, and "FS" does a number of pixels of the frame. When the probability table shown in Fig. 4 is used, the same advantageous effects as the advantageous effects by the probability table shown in Fig. 3 are acquired in regard to the arithmetic coding of the atom flag.

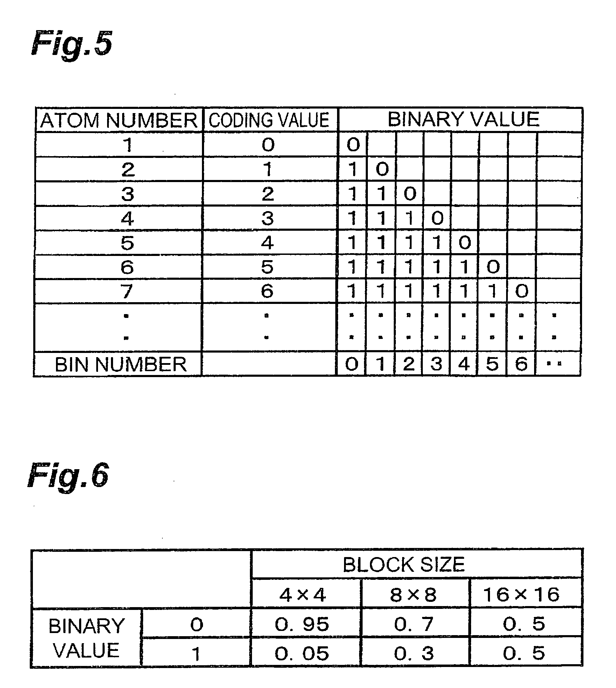

The atom number in each of the blocks is converted into a series of binary values by using correspondence relation between a coding value of the atom number and the binary value that is shown in Fig. 5.

Then, each of binary values included in the series corresponding to atoms number is arithmetic-coded on the basis of a probability table prepared for each BIN number (a BIN number denotes a bit number of the binary value.).

Fig. 6 is a diagram showing an example of a probability table that is used for the arithmetic coding of the atom number, and shows an example of the initial value on the probability table of a BIN number 0. In regard to the atom number also, since frequency of binary values differs for every BIN number according to the size of a block, the initial value on the probability table is set up so that a binary value with a high frequency may be assigned to a large section on a number line. This probability table is updated in accordance with the frequency of binary values for every BIN number in the past.

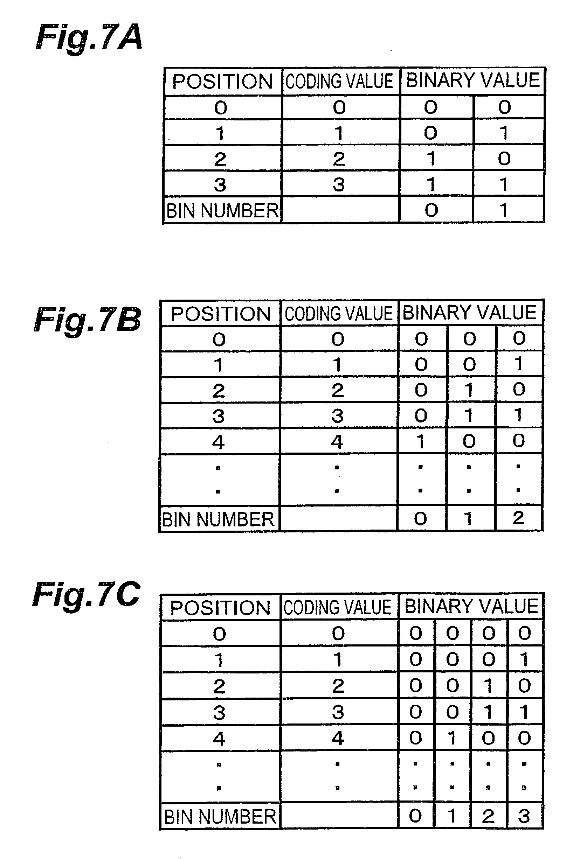

After being changed into a series of binary values with being divided in the horizontal axis and vertical axis respectively, inter-block positional information is arithmetic-coded. Fig. 7A, Fig. 7B and Fig. 7C are diagrams showing examples of correspondence relation between inter-block positional information and binary values respectively, and show the correspondence relation between the inter-block positional information and binary values in the case of block size of 4 x 4, 8 x 8 and 16 x 16, respectively.

The inter-block positional information is converted into a series of binary values by using the above-described correspondence relation in correspondence with a block size. The series of binary values into which the inter-block positional information has been converted is arithmetic-coded for every BIN number. As the probability table used for this arithmetic coding, a probability table where a section of 0.5 is assigned on a number line for both of "0" and "1" may be used.

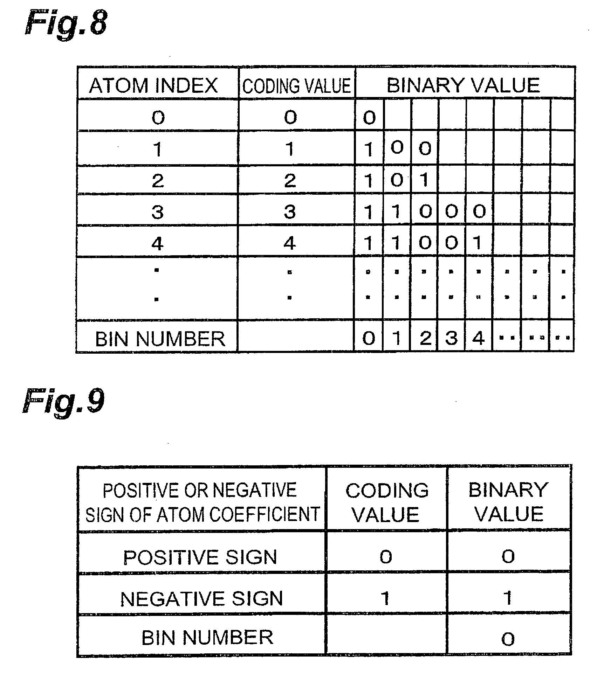

Similarly, index information is also converted into the column of binary values according to a rule shown in an example of the correspondence relation between index information and binary values that is shown in Fig. 8. In Fig. 8, index information is referred as "atom index". The series of binary values into which the index information has been converted is arithmetic-coded for every BIN number. As the probability table used for this arithmetic coding, a probability table where a section of 0.5 is assigned on a number line for both of "0" and "1" may be used. This probability table is updated in accordance with the frequency of binary values for every BIN number in the past frame.

A positive or negative sign of a quantized coefficient is converted into a binary value according to a rule shown in an example of the correspondence relation between positive and negative signs and binary values that is shown in Fig. 9. The binary value into which a positive or negative sign has been converted is arithmetic-coded by using a probability table where a section of 0.5 is assigned on a number line for both of "0" and "1", as the probability table.

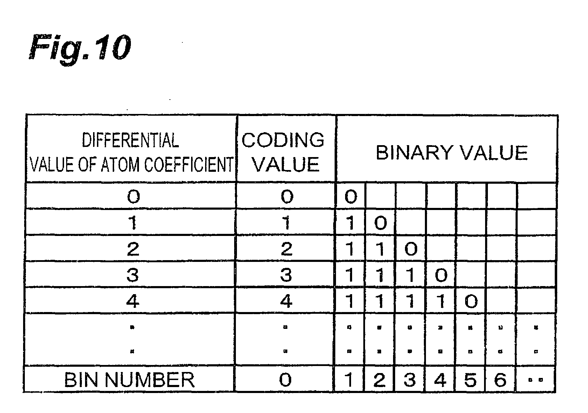

The differential quantized coefficient is converted into a series of binary values according to a rule shown in an example of the correspondence relation between differential quantized coefficients and binary values that is shown in Fig. 10. The column of binary values into which the differential quantized coefficient has been converted is arithmetic-coded for every BIN number. As the probability table used for this arithmetic coding, a probability table where a section of 0.5 is assigned on a number line for both of "0" and "1" may be used. This probability table is updated in accordance with the frequency of binary values for every BIN number in the past frame.

Returning to Fig. 1, the encoding unit 12 performs the above encoding processing of the atom information while changing the size of a block, whereby generating a plurality of compression codes. The encoding unit 12 adopts the compression code of which bit rate is at a minimum among the plurality of compression codes to include it into the compressed data, and includes the block size used for the generation of this compression code into the frame header.

When the block size into which a coding target frame is divided is made small, an amount of codes of inter-block positional information can be made small, however, an amount of codes of atom flags and atom numbers increases. Conversely, the amount of codes of atom flags and atom numbers can be made small when the size of a block is made large, but the amount of codes of the inter-block positional information increases. According to the encoding processing mentioned above, since the compression code obtained by using an optimal block size for every coding target frame is included in the compression data, the bit rate of compression data can be reduced.

The inverse quantization unit 14, inverse conversion unit 16 and addition unit 18 are portions which perform processing for storing a reference frame in the frame memory 4. The inverse quantization unit 14 performs inverse quantization of the quantized coefficient included in the atom information. The inverse conversion unit 16 performs an inverse conversion processing of the conversion processing performed by the conversion unit 8 to the atom information, and restores the prediction residual image. The addition unit 18 adds the predicted image of the reference frame and the prediction residual image restored by the inverse conversion unit 16, and generates a reference frame. This reference frame is stored in the frame memory 4 as mentioned above, and this reference frame is used for the processing which generates a predicted image of a coding target frame by the motion compensation prediction unit 2.

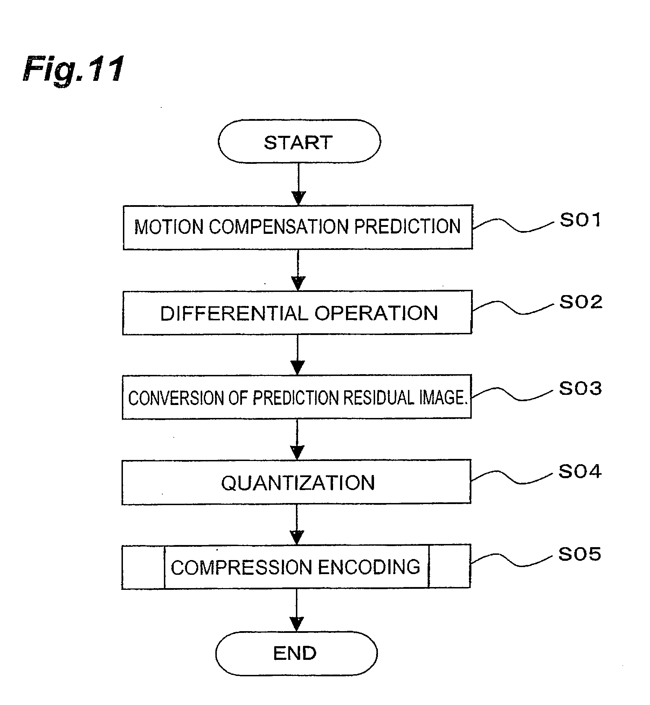

Hereafter, the operation of the video encoding apparatus 1 will be explained, and in addition, a video encoding method according to an embodiment will be explained. Fig. 11 is a flow chart of such a video encoding method.

As shown in Fig. 11, in the video encoding apparatus 1, motion compensation prediction is performed by the motion compensation prediction unit 2 (Step S01). In the motion compensation prediction, a coding target frame is divided into the plurality of blocks with predetermined size. Then, a motion vector to the reference frame is obtained by the motion compensation prediction unit 2 for each block, and a predicted image of the coding target frame is generated. Here, a frame having been coded previously can be used as the reference frame. That is, an image, which is generated by adding, with the addition unit 18, a prediction residual image generated by inverse quantization with the inverse quantization unit 14 and inverse conversion with the inverse conversion unit 16 for the frame previously coded and a predictive image of the frame, and stored in the frame memory 4, is used as the reference frame.

Next, the differential operation of the coding target frame and the predicted image is performed by the subtraction unit 6, and a prediction residual image is generated (Step S02).

The prediction residual image is converted into the atom information by processing on the basis of the above-mentioned MP method by the conversion unit 8 (Step S03).

Next, the coefficient included in the atom information is quantized by the quantization unit 10 to be converted into the quantized coefficient (Step S04). Then, the above-mentioned motion vector and the atom information are coded by the encoding unit 12 (Step S05).

In the step S05, the encoding unit 12 extracts a coefficient whose absolute value is at a minimum as the minimum absolute value among coefficients included in the atom information in the coding target frame. This minimum absolute value is included in the frame header. Next, the encoding unit 12 divides the coding target frame into a plurality of blocks.

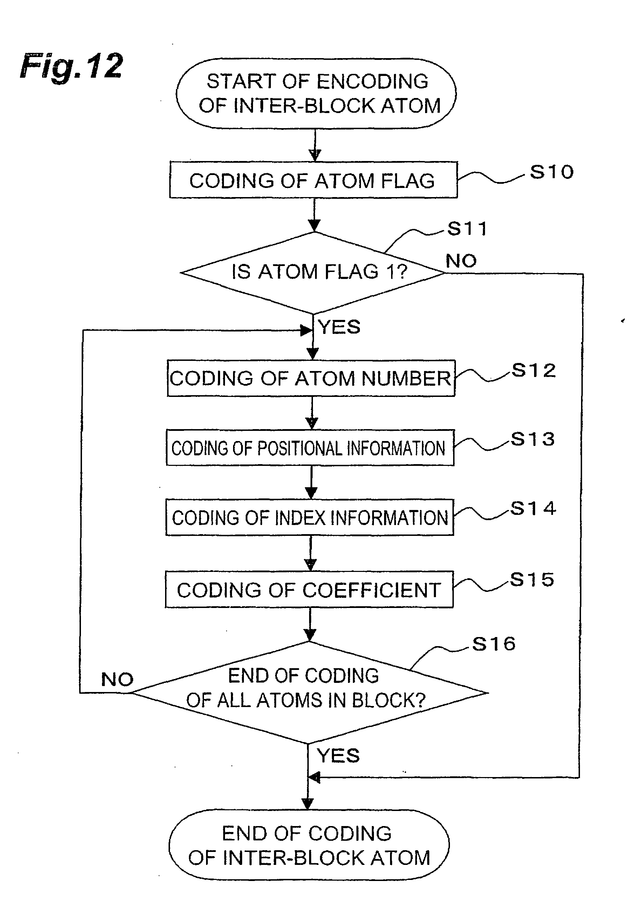

The encoding unit 12 performs encoding processing of the atom information shown in a flow chart in Fig. 12 for each block. First, for each of the plurality of blocks, the encoding unit 12 obtains an atom flag which specifies the existence of the atom information where a position is included in the block, and performs arithmetic coding of this atom flag as mentioned above (Step S10).

Next, the encoding unit 12 judges whether atom information is included in the block, that is, whether an atom flag is 1 (Step S11). When the atom flag is not 1, atom information does not exist in the block, and hence, the encoding processing of the atom information regarding the block is ended. On the other hand, when the atom flag is 1, i.e., when atom information is included in the block, the encoding unit performs the arithmetic coding of the number of the atom information included in the block as mentioned above (Step S12).

Then, the encoding unit 12 arranges the atom information included in the block in the descending order of absolute values of coefficients. Next, the encoding unit 12 converts positional information included in the atom information into the inter-block positional information which is relative positional information in the block, and performs the arithmetic coding of the inter-block positional information (Step S13).

Next, the encoding unit 12 performs the arithmetic coding of index information included in the atom information (Step S14).

Then, the encoding unit 12 performs the arithmetic coding of a positive or negative sign of a quantized coefficient included in the atom information, converts the quantized coefficient into a differential quantized coefficient which is a differential value between its absolute value and the above-described minimum absolute value, and performs the arithmetic coding of this differential quantized coefficient (Step S15).

Next, The encoding unit 12 judges whether the coding of all the atom information in the block has been ended (Step S16) and, when having ended, it ends the coding processing of the atom information regarding the block and, on the other hand, when not having ended, it repeats the processing of steps S12 to S16.

The above processing is performed while changing the size of blocks into which a coding target frame is divided, and not only a compression code with a low bit rate is adopted among the compression codes having been coded, but also the size of a block having been adopted is included in a frame header.

Next, a video decoding apparatus 20 according to an embodiment will be explained. Physically, the video decoding apparatus 20 is a computer provided with a CPU (central processing unit), a memory device, and a storage device such as a hard disk. The "computer" here also includes an information personal digital assistant such as a mobile terminal in addition to a normal computer such as a personal computer, and the idea of the present invention is widely applied to apparatuses which can process information.

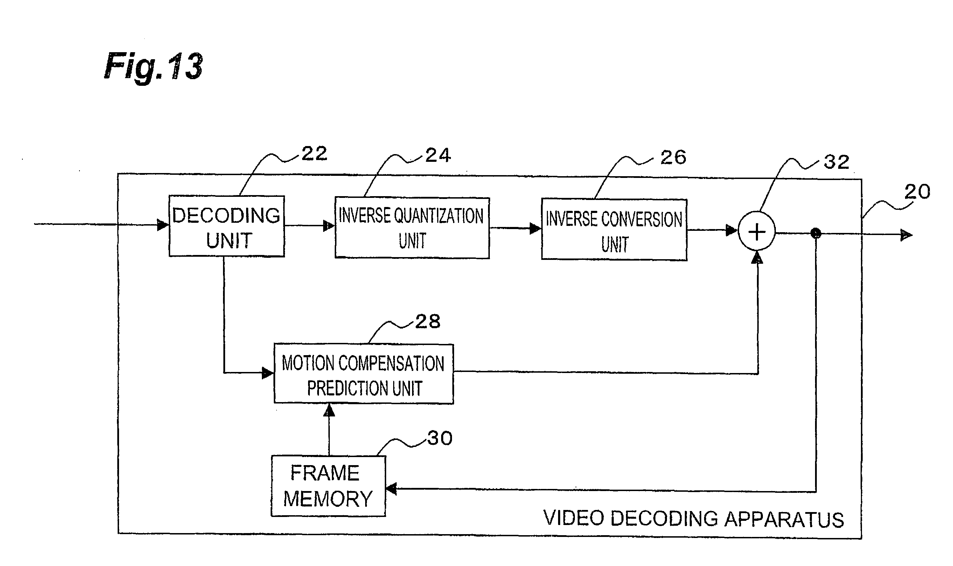

Next, the functional configuration of the video decoding apparatus 20 will be explained. Fig. 13 is a block diagram showing the functional configuration of the video decoding apparatus 20. Functionally, the video decoding apparatus 20 comprises a decoding unit (decoding means) 22, an inverse quantization unit 24, an inverse conversion unit (inverse conversion means) 26, a motion compensation prediction unit (motion compensation prediction means) 28, a frame memory 30 and an addition unit 32.

The decoding unit 22 decodes compression data generated by the video encoding apparatus 1. The decoding unit 22 knows beforehand initial values of the probability table and the update rule of the probability table which has been used by the encoding unit 12 in the video encoding apparatus 1, and can decode the compression data coded by the encoding unit 12.

In addition, the decoding unit 22 adds the minimum absolute value included in the frame header to the differential quantized coefficient obtained by decoding the compression data and, by adding a positive or negative sign to the resultant value, whereby restoring a quantized coefficient.

In addition, the decoding unit 22 converts inter-block positional information into positional information in a decoding target frame while referring to the size of the block included in the frame header. The decoding unit 22 restores the motion vector and the atom information by performing the above processing. The quantized coefficient included in this atom information is converted into a coefficient that is made by inverse quantization by the inverse quantization unit 24.

The inverse conversion unit 26 is provided with the same basis set as that used for the above-mentioned MP method by the video encoding apparatus 1, and generates a prediction residual image of a decoding target frame from the above-mentioned atom information while referring to this basis set. That is, the inverse conversion processing performed by the inverse conversion unit 26 is performed by using positional information, a coefficient and index information to a basis which are included in the atom information. The inverse conversion unit 26 restores, in a position specified by the positional information, a two-dimensional pattern resulted from multiplying a two-dimensional pattern generated with the basis specified by the positional information by the coefficient included in the atom information. A prediction residual image is generated by this inverse conversion processing.

The motion compensation prediction unit 28 generates a predicted image of the decoding target frame by using the motion vector which has been decoded by the decoding unit 22, while referring to a reference frame stored in the frame memory 30.

The frame memory 30 is a temporary memory where a frame having been decoded previously is stored as a reference frame and, as mentioned above, the reference frame referred to by the motion compensation prediction unit 28 is stored.

The addition unit 32 generates the decoding target frame by adding the prediction residual image generated by the inversion unit 26 to the predicted image generated by the motion compensation prediction unit 28.

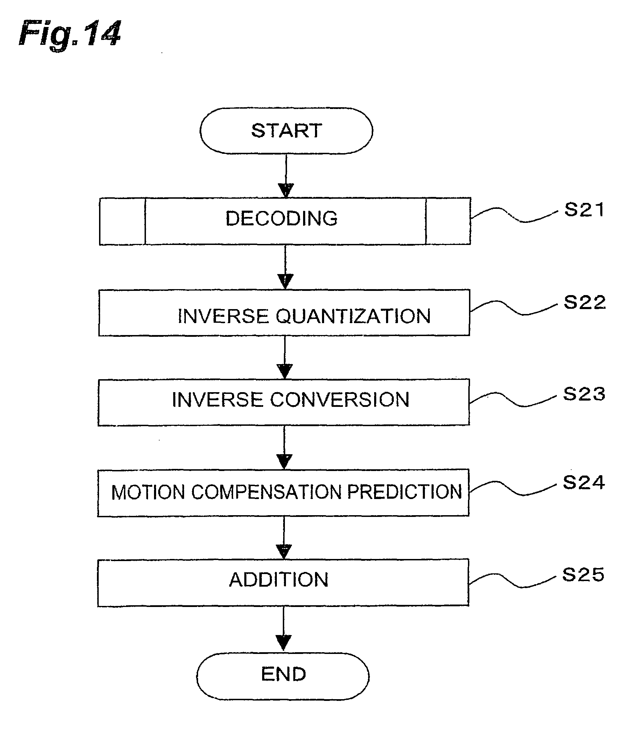

Hereafter, the operation of the video decoding apparatus 20 will be explained, and in addition, a video decoding method according to an embodiment will be explained. Fig. 14 is a flow chart showing this video decoding method.

In the video decoding apparatus 20, the compression data generated by the video encoding apparatus 1 is decoded by the decoding unit 22 as mentioned above, which is made to be the atom information where the positional information and quantized coefficient have been restored (Step S21).

The atom information having been decoded by the decoding unit 22 includes the quantized coefficient in this stage, and the quantized coefficient is converted into a coefficient having been inverse-quantized by the inverse quantization unit 24 (Step S22).

Then, the basis set, same as that used for the above-mentioned MP method by the video encoding apparatus 1, is referred to by the inverse conversion unit 26, and a prediction residual image of the decoding target frame is generated from the atom information (Step S23).

Next, the motion compensation prediction using the motion vector having been decoded by the decoding unit 22 and the reference frame stored in the frame memory 30 is executed by the motion compensation prediction unit 28, whereby a predicted image of the decoding target frame is generated (Step S24).

Then, the prediction residual image and the predicted image are added by the addition unit 32 to generate the decoding target frame (Step S25).

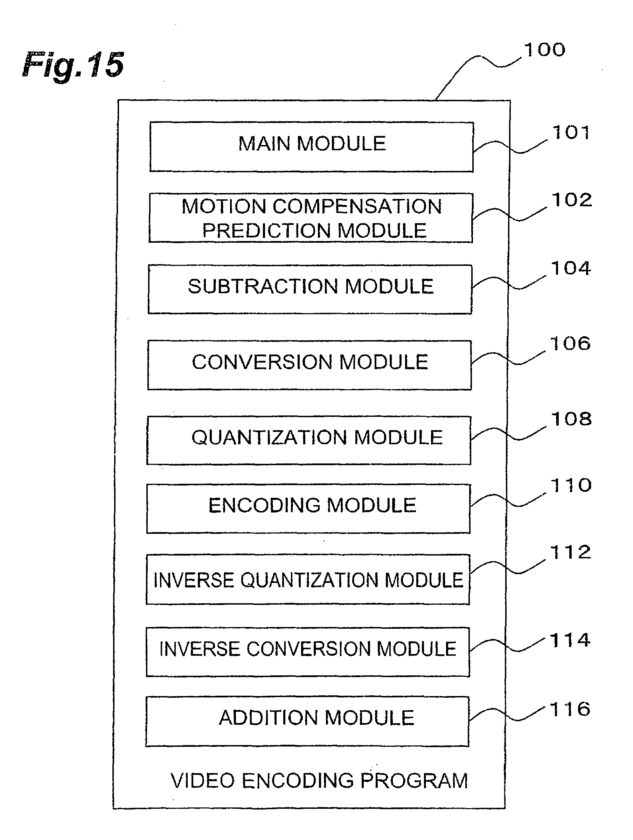

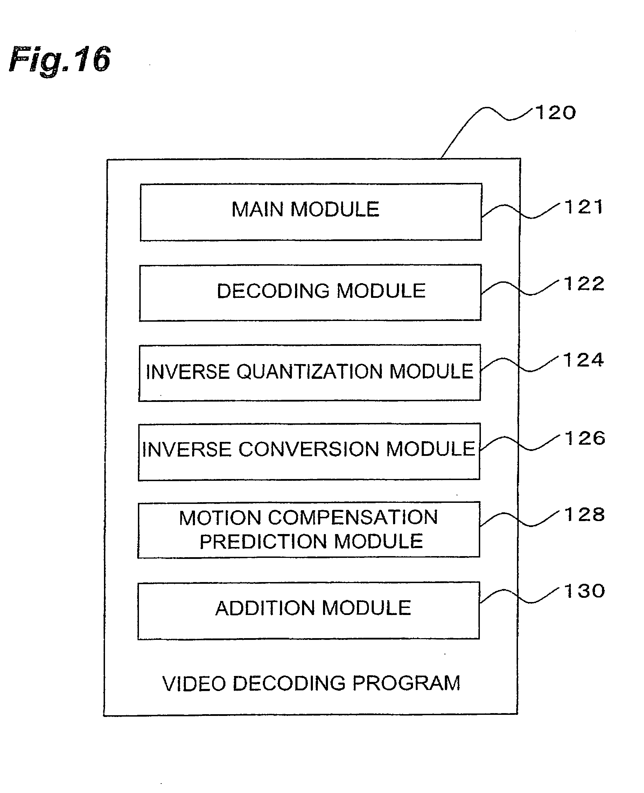

Next, a video encoding program 100 for making a computer function as the video encoding apparatus 1, and a video decoding program 120 for making a computer function as the video decoding apparatus 20 will be explained. Figs. 15 and 16 are diagrams showing the configuration of the video encoding program 100 and the video decoding program 120, respectively.

As shown in Fig. 15, the video encoding program 100 is provided with a main module 101 for controlling processing, a motion compensation prediction module 102, a subtraction module 104, a conversion module 106, a quantization module 108, an encoding module 110, an inverse quantization module 112, an inverse conversion module 114, and an addition module 116. Functions which the motion compensation prediction module 102, subtraction module 104, conversion module 106, quantization module 108, encoding module 110, inverse quantization module 112, inverse conversion module 114 and addition module 116 make a computer execute are the same as those of the above-mentioned motion compensation prediction unit 2, subtraction unit 6, conversion unit 8, quantization unit 10, encoding unit 12, inverse quantization unit 14, inverse conversion unit 16 and addition unit 18, respectively.

In addition, as shown in Fig. 16, the video encoding program 120 is provided with a main module 121 for controlling processing, a decoding module 122, an inverse quantization module 124, an inverse conversion module 126, a motion compensation prediction module 128 and an addition module 130. Functions which the decoding module 122, inverse quantization module 124, inverse conversion module 126, motion compensation prediction module 128 and addition module 130 make a computer achieve are the same as those of the above-mentioned decoding unit 22, inverse quantization unit 24, inverse conversion unit 26, motion compensation prediction unit 28 and addition unit 32, respectively.

Hereafter, actions and advantageous effects of the video encoding apparatus 1 and video decoding apparatus 20 according to this embodiment will be explained. In the video encoding apparatus 1, since a compression code with an optimal bit rate is included in compression data among compression codes generated by changing the block size every coding target frame, it becomes possible to generate the compression data of an image for coding with a low bit rate. In addition, since a code relating to the block size having been applied for each coding target frame is included in the compression data generated by this video encoding apparatus 1, the video decoding apparatus 20 can restore inter-block positional information included in the atom information into positional information in the coding target frame on the basis of this block size.

In addition, in the video encoding apparatus 1, a coefficient whose absolute value is at a minimum is extracted among coefficients included in atom information every coding target frame, the coefficient of the atom information included in the coding target frame is converted into a differential value between its absolute value and the above-described minimum absolute value, and this differential value and a positive or negative sign of the coefficient are compression-coded and included in compression data. Thus, since the amount of codes becomes small by changing a coefficient included in atom information into a differential value, a bit rate of the compression data is further reduced. In addition, since a code relating to the minimum absolute value is included in the compression data generated by the video encoding apparatus 1 for each coding target frame, the video decoding apparatus 20 can restore the differential value included in the atom information decoded from the compression data to the coefficient by referring to this minimum absolute value and the positive or negative sign.

Furthermore, in the video encoding apparatus 1, for each of a plurality of blocks into which a coding target frame is divided, the atom information included in the block is arranged in the descending order of absolute values of coefficients. The coefficient included in this atom information is made into a differential value between the same and the minimum absolute value of the coefficients, and is encoded in the arranged order. Then, when the differential value of zero appears, the compression coding of the differential value in the block is stopped. Thus, since a compression code is not generated for differential values of zero among the differential values based on coefficients of the atom information, a bit rate of the compression data is further reduced.

In addition, in the video encoding apparatus 1, an atom flag, an atom number and atom information are compression-coded by the arithmetic coding using a predetermined probability table differing in accordance with the size of blocks into which a coding target frame is divided. By using a probability table differing in accordance with the size of blocks into which a coding target frame is divided, it becomes possible to further reduce a bit rate of the compression data, because probability that atom information is included in a block and appearance probability of a numeric value of an atom number, etc. are different from each other according to the size of the block. In addition, the video decoding apparatus 20 can decode the compression data generated by the video encoding apparatus 1 by using the same probability table as the probability table used by the video encoding apparatus 1.

As mentioned above, although the embodiments of the invention relating to the coding and decoding of a dynamic image are explained, the idea of the invention is applicable not only to a video but also to the coding and decoding of a static image.

The principles of the present invention have been illustrated and described in the preferred embodiments, but it is apparent to a person skilled in the art that the present invention can be modified in arrangement and detail without departing from such principles. We, therefore, claim rights to all variations and modifications coming with the spirit and the scope of claims.

## Claims

1. image encoding apparatus comprising:

   conversion means for converting a coding target block within a coding target image into conversion information;
   quantization means for quantizing the conversion information and generating quantized conversion information; and
   encoding means for generating compression data by encoding the quantized conversion information based on predetermined entropy encoding rules,

   wherein the encoding means encodes the block size, into which the coding target image is divided, and generates compressed block size information which is included in a header information,
   and the entropy encoding rules are switched according to the block size.

2. An image encoding apparatus according to claim 1, further comprising dictionary storage means for storing a plurality of bases,
   wherein the conversion means converts the coding target image into the conversion information including index information for specifying a basis used for decomposition of the coding target image among the plurality of bases, a coefficient by which the basis specified by the index information is multiplied, and positional information for specifying a position where a pattern made by multiplying the basis specified by the index information by the coefficient is restored, based on a predetermined conversion rule,
   the encoding means generates the compression data including a compression code made by encoding the quantized conversion information generated by the quantization means based on a predetermined compression encoding rule, and
   the encoding means executes processing in which the encoding means divides the coding target image into a plurality of blocks, extracts, for each of the plurality of blocks, the quantized conversion information the positional information of which is included in the block, encodes, for each of the plurality of blocks, a flag for specifying existence of the quantized conversion information the positional information of which is included in the block, encodes, for each of the plurality of blocks, the number of items of quantized conversion information each of which includes the positional information included in the block, converts the positional information of the quantized conversion information into inter-block positional information specifying a relative position in the block in which the positional information is included, and encodes the quantized conversion information, while changing size of the block, whereby the encoding means generates a plurality of compression codes, and includes a code relating to size of the block in which a bit rate of the compression code becomes at a minimum and the compression code generated at the size in the compression data.

3. An image encoding method including:

   a conversion step in which conversion means converts a coding target block within a coding target image into conversion information;
   a quantization step in which quantization means quantizes the conversion information and generates quantized conversion information; and
   an encoding step in whcih encoding means generates compression data by encoding the quantized conversion information based on predetermined entropy encoding rules,

   wherein, in the encoding step, the encoding means encodes the block size, into which the coding target image is divided, and generates compressed block size information which is included in a header information,
   and the entropy encoding rules are switched according to the block size.

**4.** An image encoding method according to claim 3,

wherein, in the conversion step, the conversion means converts the coding target image, based on a predetermined conversion rule, into the conversion information including index information for specifying a basis used for decomposition of the coding target image among a plurality of bases stored in dictionary storage means, a coefficient by which the basis specified by the index information is multiplied, and positional information for specifying a position where a pattern made by multiplying the basis specified by the index information by the coefficient is restored,

in the encoding step, the encoding means generates the compression data including a compression code made by encoding the quantized conversion information generated by the quantization means based on a predetermined compression encoding rule, and

the encoding means executes processing in which the encoding means divides the coding target image into a plurality of blocks, extracts, for each of the plurality of blocks, the quantized conversion information the positional information of which is included in the block, encodes, for each of the plurality of blocks, a flag for specifying existence of the quantized conversion information the positional information of which is included in the block, encodes, for each of the plurality of blocks, the number of items of quantized conversion information each of which includes the positional information included in the block, converts the positional information of the quantized conversion information into inter-block positional information specifying a relative position in the block in which the positional information is included, and encodes the quantized conversion information, while changing size of the block, whereby the encoding means generates a plurality of compression codes, and includes a code relating to size of the block in which a bit rate of the compression code becomes at a minimum and the compression code generated at the size in the compression data.

**5.** An image encoding method according to claim 4,

wherein the quantization means quantizes the coefficient included in the conversion information to generate the quantized conversion information including a quantized coefficient,

when encoding the quantized conversion information in said processing, the encoding means extracts a minimum absolute value among absolute values of the quantized coefficients included in a plurality of items of quantized conversion information, includes a code relating to the minimum absolute value in the compression data, converts each of the quantized coefficients into a differential value between the absolute value for each of the quantized coefficients and the minimum absolute value, includes the differential values in the compression code after encoding, and includes a positive or negative sign for each of the quantized coefficients in the compression code after encoding.

**6.** An image encoding method according to claim 4, wherein, in the encoding step, the encoding means uses arithmetic coding as the predetermined compression encoding rule and executes the arithmetic coding by using a predetermined probability table being different according to size of the block.

**7.** An image encoding program making a computer function as:

conversion means for converting a coding target block within a coding target image into conversion information;

quantization means for quantizing the conversion information and generating quantized conversion information; and

encoding means for generating compression data by encoding the quantized conversion information based on predetermined entropy encoding rules,

wherein the encoding means encodes the block size, into which the target image data is divided, and generates compressed block size information which is included in a header information,

and the entropy encoding rules are switched according to the block size.

**8.** An image decoding apparatus comprising:

decoding means for generating quantized conversion information by decoding compression data based on predetermined entropy decoding rules;

inverse quantization means for inversely quantizing the quantized conversion information and generating conversion information; and

inverse conversion means for inversely converting the conversion information into a decoding target block within a decoding target image,

wherein the decoding means decodes compressed block size information which is included in a header information and generates the block size, into which the decoding target image is divided,

and the entropy decoding rules are switched according to the block size.

**9.** An image decoding apparatus according to claim 8, further comprising dictionary storage means for storing a plurality of bases,

wherein the decoding means decodes the compression data including a compression code made by encoding the quantized conversion information, based on a predetermined decoding rule, the quantized conversion information being made by quantizing the conversion information which is made by conversing the decoding target image, based on a predetermined conversion rule, into index information to a basis used for decomposition of the decoding target image among the plurality of bases, a coefficient by which the basis specified by the index information is multiplied, and positional information for specifying a position where a pattern made by multiplying the basis specified by the index information by the coefficient is restored,

the inverse conversion means generates the decoding target image from the conversion information by using the plurality of bases stored in the dictionary storage means, base on a predetermined inverse conversion rule,

the compression data includes a code relating to size of blocks into which the decoding target image is divided, and the positional information included in the conversion information is made to be inter-block positional information specifying a relative position in the block in which the positional information is included, and

the decoding means refers to the code relating to size of the block included in the compression data and converts the inter-block positional information included in the conversion information into the positional information specifying a position in the decoding target image.

**10.** An image decoding method including:

a decoding step in which decoding means generates quantized conversion information by decoding compression data based on predetermined entropy decoding rules;

an inverse quantization step in which inverse quantization means inversely quantizes the quantized conversion information and generating conversion information; and

an inverse conversion step in which inverse conversion means inversely convertes the conversion information into a decoding target block within a decoding target image,

wherein, in the decoding step, the decoding means decodes compressed block size information which is included in a header information and generates the block size, into which the decoding target image is divided, and

the entropy decoding rules are switched according to the block size.

**11.** An image decoding method according to claim 10,

wherein, in the decoding step, the decoding means decodes compression data including a compression code made by encoding the quantized conversion information, based on a predetermined decoding rule, the quantized conversion information being made by quantizing the conversion information which is made by conversing the decoding target image, based on a predetermined conversion rule, into index information to a basis used for decomposition of the decoding target image among a plurality of bases, a coefficient by which the basis specified by the index information is multiplied, and positional information for specifying a position where a pattern made by multiplying the basis specified by the index information by the coefficient is restored,

in the inverse conversion step, the inverse conversion means generates the decoding target image from the conversion information by using the plurality of bases stored in dictionary storage means, based on a predetermined inverse conversion rule,

the compression data includes a code relating to size of blocks into which the decoding target image is divided, and the positional information included in the conversion information is made to be inter-block positional information specifying a relative position in the block in which the positional information is included, and

in the decoding step, the decoding means refers to the code relating to size of the block included in the compression data and converts the inter-block positional information included in the conversion information into the positional information specifying a position in the decoding target image.

**12.** An image decoding method according to claim 11,

wherein the quantized conversion information includes a quantized coefficient being made by quantizing the coefficient,

the compression data includes the compression code made by encoding a code relating to a minimum absolute value among absolute values of the quantized coefficients included in a plurality of items of quantized conversion information, differential values between the absolute values of the quantized coefficients and the minimum absolute value, a positive or negative sign of the quantized coefficients, and

in the decoding step, the decoding means adds the minimum absolute value to each of the differential values included in the plurality of items of quantized conversion information generated by decoding the compression data with reference to a code relating to the minimum absolute value, and gives the positive or negative sign included in the quantized conversion information to an added value.

**13.** An image decoding method according to Claim 11,

wherein the compression code included in the compression data is generated by encoding with arithmetic coding in which a predetermined probability table being different according to size of the block is used as the predetermined compression encoding rule, and

in the decoding step, the decoding means executes inverse arithmetic coding based on the predetermined decoding rule by using the predetermined probability table according to size of blocks into which the decoding target image is divided.

**14.** An image decoding program making a computer function as:

decoding means for generating quantized conversion information by decoding compression data based on predetermined entropy decoding rules;

inverse quantization means for inversely quantizing the quantized conversion information and generating conversion information; and

inverse conversion means for inversely converting the conversion information into a decoding target block within a decoding target image,

wherein the decoding means decodes compressed block size information which is included in a header information and generates the block size, into which the decoding target image is divided,

and the entropy decoding rules are switched according to the block size.

*Fig.1*

VIDEO ENCODING APPARATUS

EP 1 453 005 A2

*Fig.1*

EP 1 453 005 A2

# Fig.2

| ATOM FLAG | CODING VALUE | BINARY VALUE |
|---|---|---|
| WITHOUT ATOM | 0 | 0 |
| WITH ATOM | 1 | 1 |
| BIN NUMBER | | 0 |

# Fig.3

| | | BLOCK SIZE | | |
|---|---|---|---|---|
| | | $4 \times 4$ | $8 \times 8$ | $16 \times 16$ |
| BINARY VALUE | 0 | 0. 95 | 0. 7 | 0. 5 |
| | 1 | 0. 05 | 0. 3 | 0. 5 |

# Fig.4

| | | BLOCK SIZE | | |
|---|---|---|---|---|
| | | 4 × 4 | 8 × 8 | 16 × 16 |
| BINARY VALUE | 0 | 1−16×FAN／FS | 1−64×FAN／FS | 1−256×FAN／FS |
| | 1 | 16×FAN／FS | 64×FAN／FS | 256×FAN／FS |

EP 1 453 005 A2

## Fig.5

| ATOM NUMBER | CODING VALUE | BINARY VALUE | | | | | | | |
|---|---|---|---|---|---|---|---|---|---|
| 1 | 0 | 0 | | | | | | | |
| 2 | 1 | 1 | 0 | | | | | | |
| 3 | 2 | 1 | 1 | 0 | | | | | |
| 4 | 3 | 1 | 1 | 1 | 0 | | | | |
| 5 | 4 | 1 | 1 | 1 | 1 | 0 | | | |
| 6 | 5 | 1 | 1 | 1 | 1 | 1 | 0 | | |
| 7 | 6 | 1 | 1 | 1 | 1 | 1 | 1 | 0 | |
| . | . | . | . | . | . | . | . | . | . |
| . | . | . | . | . | . | . | . | . | . |
| BIN NUMBER | | 0 | 1 | 2 | 3 | 4 | 5 | 6 | .. |

## Fig.6

| | | BLOCK SIZE | | |
|---|---|---|---|---|
| | | 4 × 4 | 8 × 8 | 16 × 16 |
| BINARY VALUE | 0 | 0. 95 | 0. 7 | 0. 5 |
| | 1 | 0. 05 | 0. 3 | 0. 5 |

**Fig.7A**

| POSITION | CODING VALUE | BINARY VALUE | |
|---|---|---|---|
| 0 | 0 | 0 | 0 |
| 1 | 1 | 0 | 1 |
| 2 | 2 | 1 | 0 |
| 3 | 3 | 1 | 1 |
| BIN NUMBER | | 0 | 1 |

**Fig.7B**

| POSITION | CODING VALUE | BINARY VALUE | | |
|---|---|---|---|---|
| 0 | 0 | 0 | 0 | 0 |
| 1 | 1 | 0 | 0 | 1 |
| 2 | 2 | 0 | 1 | 0 |
| 3 | 3 | 0 | 1 | 1 |
| 4 | 4 | 1 | 0 | 0 |
| . | . | . | . | . |
| . | . | . | . | . |
| BIN NUMBER | | 0 | 1 | 2 |

**Fig.7C**

| POSITION | CODING VALUE | BINARY VALUE | | | |
|---|---|---|---|---|---|
| 0 | 0 | 0 | 0 | 0 | 0 |
| 1 | 1 | 0 | 0 | 0 | 1 |
| 2 | 2 | 0 | 0 | 1 | 0 |
| 3 | 3 | 0 | 0 | 1 | 1 |
| 4 | 4 | 0 | 1 | 0 | 0 |
| . | . | . | . | . | . |
| . | . | . | . | . | . |
| BIN NUMBER | | 0 | 1 | 2 | 3 |

# Fig.8

| ATOM INDEX | CODING VALUE | BINARY VALUE | | | | | | | |
|:---:|:---:|:---:|:---:|:---:|:---:|:---:|:---:|:---:|:---:|
| 0 | 0 | 0 | | | | | | | |
| 1 | 1 | 1 | 0 | 0 | | | | | |
| 2 | 2 | 1 | 0 | 1 | | | | | |
| 3 | 3 | 1 | 1 | 0 | 0 | 0 | | | |
| 4 | 4 | 1 | 1 | 0 | 0 | 1 | | | |
| . | . | . | . | . | . | . | . | . | . |
| . | . | . | . | . | . | . | . | . | . |
| BIN NUMBER | | 0 | 1 | 2 | 3 | 4 | .. | .. | .. |

# Fig.9

| POSITIVE OR NEGATIVE SIGN OF ATOM COEFFICIENT | CODING VALUE | BINARY VALUE |
|:---:|:---:|:---:|
| POSITIVE SIGN | 0 | 0 |
| NEGATIVE SIGN | 1 | 1 |
| BIN NUMBER | | 0 |

# Fig.10

| DIFFERENTIAL VALUE OF ATOM COEFFICIENT | CODING VALUE | BINARY VALUE | | | | | | |
|:---:|:---:|:---:|:---:|:---:|:---:|:---:|:---:|:---:|
| 0 | 0 | 0 | | | | | | |
| 1 | 1 | 1 | 0 | | | | | |
| 2 | 2 | 1 | 1 | 0 | | | | |
| 3 | 3 | 1 | 1 | 1 | 0 | | | |
| 4 | 4 | 1 | 1 | 1 | 1 | 0 | | |
| . | . | . | . | . | . | . | . | . |
| . | . | . | . | . | . | . | . | . |
| BIN NUMBER | 0 | 1 | 2 | 3 | 4 | 5 | 6 | . . |

*Fig.11*

START

MOTION COMPENSATION PREDICTION — SO1

DIFFERENTIAL OPERATION — SO2

CONVERSION OF PREDICTION RESIDUAL IMAGE. — SO3

QUANTIZATION — SO4

COMPRESSION ENCODING — SO5

END

*Fig.12*

START OF ENCODING
OF INTER-BLOCK ATOM

CODING OF ATOM FLAG — S10

IS ATOM FLAG 1? — S11   NO

YES

CODING OF ATOM NUMBER — S12

CODING OF POSITIONAL INFORMATION — S13

CODING OF INDEX INFORMATION — S14

CODING OF COEFFICIENT — S15

END OF CODING
OF ALL ATOMS IN BLOCK? — S16

NO          YES

END OF CODING
OF INTER-BLOCK ATOM

## Fig. 13

*Fig.14*

START

DECODING ~ S21

INVERSE QUANTIZATION ~ S22

INVERSE CONVERSION ~ S23

MOTION COMPENSATION PREDICTION ~ S24

ADDITION ~ S25

END

**Fig.15**

100

VIDEO ENCODING PROGRAM

| MAIN MODULE | 101 |
| MOTION COMPENSATION PREDICTION MODULE | 102 |
| SUBTRACTION MODULE | 104 |
| CONVERSION MODULE | 106 |
| QUANTIZATION MODULE | 108 |
| ENCODING MODULE | 110 |
| INVERSE QUANTIZATION MODULE | 112 |
| INVERSE CONVERSION MODULE | 114 |
| ADDITION MODULE | 116 |

*Fig.16*

120

| MAIN MODULE | 121 |
| DECODING MODULE | 122 |
| INVERSE QUANTIZATION MODULE | 124 |
| INVERSE CONVERSION MODULE | 126 |
| MOTION COMPENSATION PREDICTION MODULE | 128 |
| ADDITION MODULE | 130 |

VIDEO DECODING PROGRAM